# FASCICULE DE BREVET EUROPEEN

(11) **EP 3 114 409 B1**
(45) Date de publication et mention de la délivrance du brevet: **25.04.2018**
(21) Numéro de dépôt: 15706859.4
(22) Date de dépôt: 27.01.2015
(51) Int. Cl.: F23R 3/00, F23R 3/52, F23R 3/60

(54) **CHAMBRE DE COMBUSTION ANNULAIRE DE TURBOMACHINE**
RINGFÖRMIGE BRENNKAMMER FÜR EINEN TURBINENMOTOR
ANNULAR TURBINE ENGINE COMBUSTION CHAMBER

(30) Priorité: 19.02.2014 FR 1451321
(43) Date de publication de la demande: 11.01.2017
(73) Titulaire: Safran Helicopter Engines, 64510 Bordes (FR)
(72) Inventeur: SAVARY, Nicolas, F-64110 Jurancon (FR); BERTEAU, Patrick, F-64230 Arbus (FR); CARRERE, Bernard, F-64000 Pau (FR); DUBOURDIEU, Jean-Marc, F-64230 Mazerolles (FR); NAUDOT, Ludovic, F-64510 Angais (FR)
(74) Mandataire: Milien, Jean-Baptiste Aurélien
(86) Numéro de dépôt international: PCT/FR2015/050179
(87) Numéro de publication internationale: WO 2015/124840

(56) Documents cités:
- EP-A1- 2 107 308
- EP-A2- 1 152 191
- WO-A2-2012/168636

## Description

### DOMAINE DE L'INVENTION

L'invention concerne le domaine des chambres de combustion annulaires de turbomachine, et plus particulièrement, mais pas exclusivement, de turbomoteur d'hélicoptère.

Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteur pour des hélicoptères, des navires, des trains, ou encore comme moteur industriel. Les turbopropulseurs (turbomoteur entrainant une hélice) sont également des turbomoteurs utilisés comme moteur d'avion.

### ETAT DE LA TECHNIQUE ANTERIEURE

Une chambre de combustion annulaire classique de turbomachine présente une direction axiale, une direction radiale et une direction azimutale, et comprend généralement cinq parois annulaires chaque paroi annulaire délimitant au moins une partie de l'enceinte de la chambre de combustion.

Ces parois annulaires sont classiquement assemblées par soudage ou boulonnage. L'assemblage par soudage rend impossible le démontage de la première et de la deuxième paroi, par exemple pour la maintenance ou pour le remplacement d'une de ces parois. L'assemblage par boulonnage présente l'inconvénient de favoriser l'apparition de criques et fissures au voisinage des trous d'engagement des vis des boulons à cause des blocages générés, ce qui fragilise la chambre de combustion. En outre, ces types d'assemblages sont complexes, longs et onéreux.

Le document WO2012/168636 A2 décrit une chambre de combustion annulaire de turbomachine selon le préambule de la revendication 1.

### PRESENTATION DE L'INVENTION

Un mode de réalisation concerne une chambre de combustion annulaire de turbomachine présentant une direction axiale, une direction radiale et une direction azimutale, comprenant une première paroi annulaire et une seconde paroi annulaire, chaque paroi délimitant au moins une partie de l'enceinte de la chambre de combustion annulaire, les première et seconde parois présentant des éléments complémentaires d'emboitement, la première paroi présentant au moins un premier trou traversant tandis que la seconde paroi présente au moins un second trou traversant, la chambre de combustion comprenant en outre au moins une broche engagée dans une paire de trous comprenant un premier trou et un second trou, ladite broche verrouillant l'emboitement des première et seconde parois. Selon l'invention, la broche est formée par un injecteur. On comprend que la première paroi annulaire comprend des premiers éléments d'emboitement tandis que la seconde paroi annulaire comprend des seconds éléments d'emboitement, les premiers et seconds éléments d'emboitement étant respectivement complémentaires l'un de l'autre de manière à pouvoir coopérer par emboitement selon la direction axiale et/ou azimutale de la chambre de combustion. En d'autres termes, les premiers et seconds éléments d'emboitement sont emboités ou engagés l'un avec l'autre en les déplaçant l'un par rapport à l'autre selon la direction axiale et/ou azimutale de la chambre de combustion.

La chambre de combustion peut comprendre deux parois annulaires ou plus. Dans ce dernier cas, l'assemblage de ces plusieurs parois annulaires peut être verrouillé par la broche. Par exemple une même broche peut verrouiller l'assemblage de trois parois distinctes (ou plus). Selon un autre exemple, une broche peut verrouiller l'assemblage de deux parois, à savoir une première et une deuxième parois, tandis qu'une autre broche verrouille l'assemblage de la premier ou de la deuxième paroi avec une troisième paroi.

On comprend que la première paroi présente un ou plusieurs premier(s) trou(s), que la seconde paroi présente un ou plusieurs second(s) trou(s). Bien entendu, selon une variante, il y a autant de premiers trous que de seconds trous, chaque premier trou formant une paire de trous avec un second trou (ou vice versa). Par la suite, et sauf indication contraire, on désigne respectivement par « le premier trou » et « le second trou » l'unique premier trou ou l'ensemble des premiers trous et l'unique second trou ou l'ensemble des seconds trous.

La chambre de combustion comprend une ou plusieurs broches. Par la suite, et sauf indication contraire, par « la broche » on désigne l'unique broche ou l'ensemble des broches. La broche est configurée pour s'engager simultanément dans un premier trou et second trou formant une paire de trous. La broche est engagée, avec ou sans jeu, dans une paire de premier et second trous. Une telle broche ne coopère que par engagement ou emmanchement avec la paire de trous de manière à coupler les première et seconde parois selon certain(s) degrés de liberté, par exemple en translation axiale et/ou en rotation autour de la direction axiale de la chambre de combustion, sans toutefois bloquer l'ensemble des degrés de liberté. Une telle broche permet d'éviter, ou de réduire significativement les risques d'apparition de criques ou fissures par rapport à l'utilisation classique de boulons. Ainsi, une telle broche permet d'assembler les parois de la chambre de combustion sans besoin de souder et/ou de sertir les deux parois, comme cela est fait au sein des chambres de combustion de l'état de la technique.

Bien entendu, lorsque la chambre de combustion présente plusieurs paires de premier et second trous, ladite chambre de combustion peut présenter plusieurs broches, chaque broche étant engagée dans une paire de trous. Selon une variante, lorsqu'une broche est prévue dans une paire de trous, cette paire de trous reçoit une unique broche. Selon une variante, il y a autant de broches que de paires de premier et second trous. Selon une variante, les broches sont similaires.

La broche bloque les déplacements relatifs axiaux et/ou azimutaux entre la première et la seconde paroi. Ainsi, lorsque la ou les broches sont engagées dans la ou les paires de trous, l'emboitement des première et seconde parois est verrouillé. Pour déboiter les première et seconde parois l'une de l'autre, il faut donc au préalable retirer la ou les broches du ou des paires de premier et second trous.

Ainsi, la chambre de combustion peut être assemblée aisément, rapidement, et à faible coût comparativement aux chambres de combustion de l'état de la technique, et ce sans nécessiter d'opération de soudure. Par ailleurs, une telle chambre de combustion peut être tout aussi facilement démontée, facilitant ainsi les opérations de maintenance.

Dans certains modes de réalisation, le premier trou et le second trou de la paire de trous sont disposées sensiblement en vis-à-vis

On comprend également que par « vis-à-vis » on entend que le premier trou est aligné axialement et azimutalement avec le second trou, en présentant une même position angulaire. En d'autres termes, les premier et second trous de la paire de trous ne sont pas diamétralement opposés. Une telle configuration en vis-à-vis permet l'utilisation de broches simples, et permet un assemblage aisé et efficace.

Selon une variante, la chambre de combustion présente plusieurs broches, chaque broche étant formée par un injecteur.

En utilisant un injecteur comme broche on optimise la masse de la chambre de combustion, problématique constante au sein des turbomachines utilisées en aéronautique. On simplifie également la structure de la chambre de combustion, ce qui participe à faciliter son montage/démontage. De plus, en utilisant les injecteurs comme broches, on peut fixer et positionner la chambre de combustion directement par ce biais au sein d'une turbomachine.

Dans certains modes de réalisation, la broche s'étend sensiblement radialement.

Par « direction sensiblement radiale » on entend une direction parallèle à un plan radial et formant un angle compris entre 60° et 120° par rapport à l'axe de la chambre de combustion.

Une telle orientation de la ou des broches permet d'assurer une certaine facilité dans l'assemblage de la chambre de combustion tandis que le verrouillage de l'emboitement est encore plus satisfaisant.

Dans certains modes de réalisation, les éléments complémentaires d'emboitement comprennent une pluralité de languettes axiales s'étendant depuis une paroi parmi la première et la seconde paroi et une pluralité de jours ménagés dans l'autre paroi parmi la première et la seconde paroi, lesdits jours recevant les languettes. Dans ce cas, les éléments complémentaires d'emboitement forment des éléments complémentaires d'emboitement axial.

On comprend que la première paroi et/ou la seconde paroi comprend une ou plusieurs languettes. Ainsi, la première paroi peut présenter des languettes tandis que la seconde paroi ne présente aucune languette, la première paroi peut ne présenter aucune languette tandis que la seconde paroi présente des languettes, ou encore la première paroi peut présenter une pluralité de premières languettes tandis que la seconde paroi présente une pluralité de secondes languettes.

L'autre paroi, comporte des jours disposés en regard des languettes, de manière à pouvoir recevoir et coopérer par emboitement axial avec les languettes. Ainsi, si seule la première paroi présente des languettes alors la seconde paroi présente des jours, si seule la seconde paroi présente des languettes alors la première paroi présente des jours, tandis que si la première paroi présente des premières languettes et la seconde paroi présente des secondes languettes, alors la première paroi présente des premiers jours recevant les secondes languettes tandis que la seconde paroi présente des seconds jours recevant les premières languettes.

Selon une variante, les languettes et les jours sont régulièrement répartis (ou espacés) azimutalement. On comprend donc que l'écartement angulaire entre les languettes adjacentes / jours adjacents est égal. Une telle répartition permet d'obtenir une certaine symétrie de révolution des éléments complémentaires d'emboitement, ce qui facilite les opérations d'emboitement des parois, et donc du montage de la chambre de combustion.

Dans certains modes de réalisation, le trou d'une paroi parmi la première et la seconde paroi est ménagé dans une lame faisant saillie.

On comprend que la lame est une partie en saillie de la première paroi si le trou est le premier trou tandis que la lame est une partie en saillie de la seconde paroi si le trou est le second trou. Une telle configuration permet de diminuer la masse d'une paroi tout en diminuant l'encombrement de la chambre de combustion au voisinage de la lame. Par ailleurs, cette configuration permet de confiner l'emplacement du trou à une position bien particulière et maitrisée au sein de la chambre de combustion, réduisant ainsi les risques de fuites, ces fuites étant pénalisantes du point de vue des performances de la chambre de combustion.

Dans certains modes de réalisation, une saillie disposée au voisinage de l'autre trou parmi le premier trou et le second trou s'étend sensiblement parallèlement à l'axe dudit autre trou de manière à coopérer par encliquetage avec la lame.

Par exemple le voisinage d'un trou comprend la portion annulaire de la paroi qui s'étend autour du trou sur trois fois le diamètre (ou la dimension maximale) du trou. Par exemple, la saillie est formée par un bossage usiné directement sur la paroi, par exemple par emboutissage, ou par une pièce rapportée et fixée sur la paroi.

L'encliquetage (ou clipsage) est un mode d'assemblage de deux parties par engagement et déformation élastique (en général déformation locale, par exemple de la lame, ou par déformation de l'ensemble des pièces impliquées dans l'assemblage). Lorsque les deux parties sont engagées dans la position d'encliquetage, les parties ont généralement repris leur forme initiale et ne présentent plus de déformation élastique (ou une déformation élastique moindre). Lorsque les deux parties sont engagées l'une avec l'autre dans la position d'encliquetage, elles coopèrent l'une avec l'autre de manière à s'opposer, voire bloquer, les mouvements relatifs desdites pièces dans le sens du dégagement (sens opposé au sens de l'engagement). En position d'encliquetage, les deux parties peuvent en outre coopérer de manière à s'opposer, voire bloquer, leurs mouvements relatifs dans le sens du prolongement de l'engagement, au-delà de la position d'encliquetage.

Un tel encliquetage permet de maintenir les première et seconde parois emboitées avant de verrouiller l'emboitement à l'aide de la broche.

Dans certains modes de réalisation, la bordure dudit autre trou forme une saillie s'étendant sensiblement parallèlement à l'axe dudit autre trou de manière à coopérer par encliquetage avec la lame.

Dans certains modes de réalisation, une paroi parmi la première paroi et la seconde paroi présente un épaulement annulaire axial coopérant en butée avec l'autre paroi parmi la première paroi et la seconde paroi.

Un tel épaulement permet de former un plan de jointure entre la première et la seconde paroi, grâce à quoi les fuites au sein de la chambre de combustion sont minimisées voire nulles.

Dans certains modes de réalisation, la chambre de combustion comprend uniquement deux parois annulaires délimitant l'enceinte de la chambre de combustion, à savoir la première paroi annulaire et la seconde paroi annulaire

La première et la seconde paroi définissent donc à elles seules l'enceinte de la chambre de combustion. Une telle chambre de combustion présente un nombre particulièrement réduit de parois, ce qui rend son assemblage d'autant plus aisé, rapide et bon marché. Par ailleurs, les opérations de démontage pour la maintenance en sont également facilitées. De plus, une chambre de combustion présentant un nombre aussi réduit de parois présente des risques de fuites au voisinage des jointures entre les différentes paroi particulièrement faibles.

Un mode de réalisation concerne une turbomachine comprenant une chambre de combustion annulaire selon l'un quelconque des modes de réalisation décrits dans le présent exposé.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une turbomachine équipée d'une chambre de combustion,
- la figure 2 représente les parois annulaires de la chambre de combustion de la figure 1 vues en perspective,
- la figure 3 représente une vue en détail des parois annulaires de la figure 1, et
- la figure 4 représente les parois annulaires de la figure 1 assemblées.

### DESCRIPTION DETAILLEE D'EXEMPLES DE REALISATION

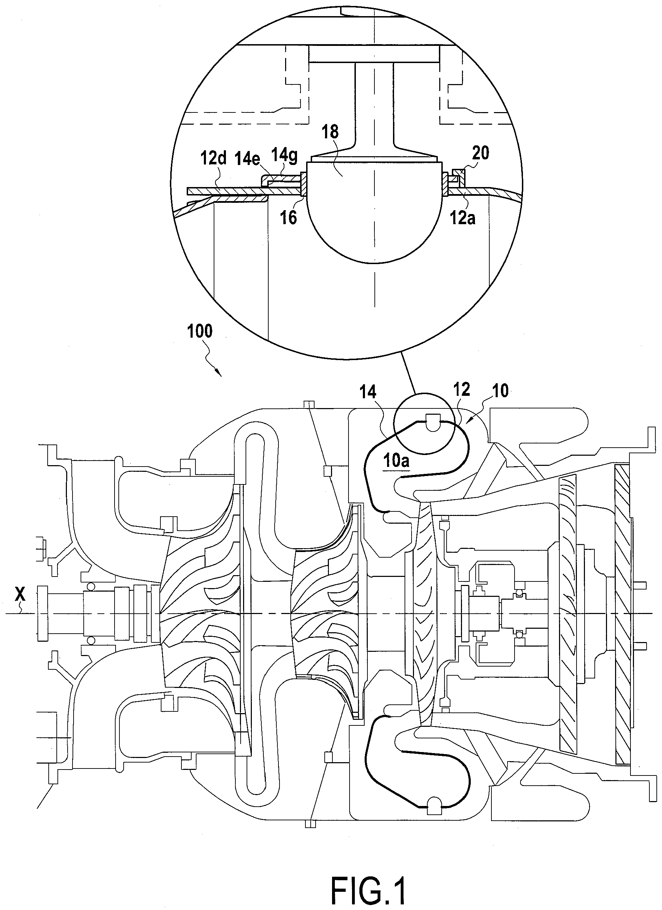

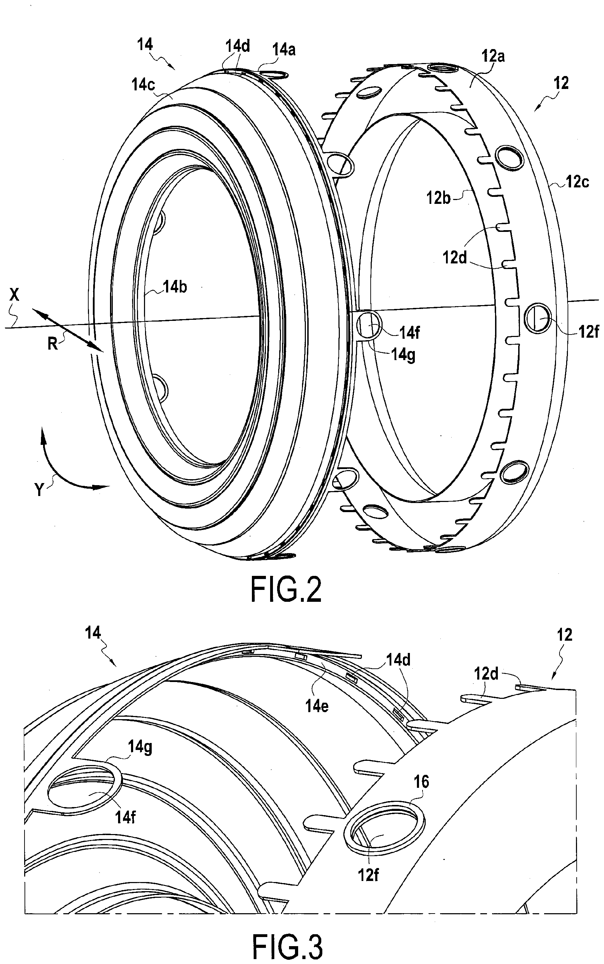

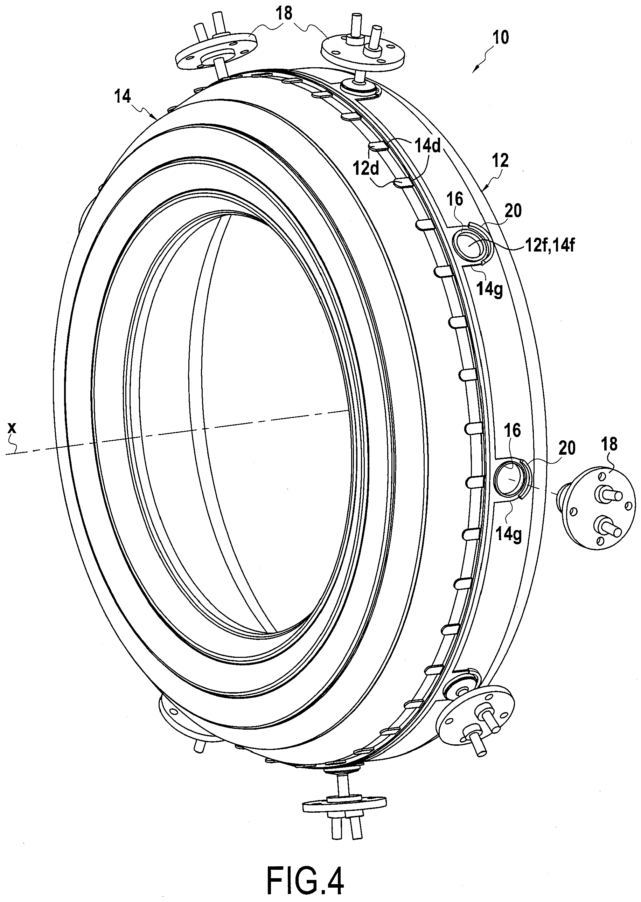

La figure 1 représente une turbomachine 100 équipée d'une chambre de combustion annulaire 10 tandis que les figures 2 à 4 représentent plus en détail les deux parois annulaires 12 et 14 de cette chambre de combustion 10. On notera que cette chambre de combustion 10 est une chambre annulaire du type à écoulement inversé, mais que l'invention n'est pas limitée à ce type particulier de chambre de combustion.

La chambre de combustion 10 présente une direction axiale (selon l'axe X), une direction radiale R et une direction azimutale Y. La chambre de combustion 10 présente une symétrie de révolution selon l'axe X. Dans cet exemple, la première paroi 12 forme un tube à flamme délimitant l'enceinte où le carburant s'enflamme, i.e. où la combustion a lieu. La deuxième paroi 14 forme un coude extérieur et sert de déflecteur pour guider l'écoulement des gaz issus du tube à flamme. Cet exemple de chambre de combustion 10 comprend uniquement les deux parois annulaires 12 et 14 pour délimiter l'enceinte 10a de la chambre de combustion 10.

Plus particulièrement, la première paroi 12 et la seconde paroi 14 présentent chacune une forme générale sensiblement de demi-tore, le tore étant coupé perpendiculairement à son axe de révolution, ou de moule à « donut », les deux demi-tores étant disposés en regard l'un de l'autre. Ainsi, chaque paroi 12 et 14 comprend une portion extérieure sensiblement axiale 12a et 14a, une portion intérieure sensiblement axiale 12b et 14b, et un fond sensiblement radial 12c et 14c reliant respectivement les portions extérieure 12a et intérieure 12b de la première paroi 12 et les portions extérieure 14a et intérieure 14b de la seconde paroi 14. Pour rappel, de manière générale et sauf précision contraire, les adjectifs « intérieur » et « extérieur » sont utilisés en référence à une direction radiale de sorte que la partie intérieure (i.e. radialement intérieure) d'un élément est plus proche de l'axe X que la partie extérieure (i.e. radialement extérieure) du même élément.

Dans cet exemple, le rayon de la portion extérieure 12a de la première paroi 12 est sensiblement égal, mais inférieur, au rayon de la portion extérieure 14a de la seconde paroi 14 tandis que le rayon de la portion intérieure 12b de la première paroi 12 est supérieur au rayon 14b de la seconde paroi 14. Ainsi, on peut assembler la première paroi 12 avec la seconde paroi 14 par leur paroi extérieures 12a et 14a, la portion extérieure 12a de la première paroi 21 étant disposée à l'intérieur de la portion extérieure 14a de la seconde paroi 14, tandis que la différence de rayon des portions intérieures 12b et 14b permet de crée un conduit d'échappement des gaz de combustion.

La première paroi 12 présente une pluralité de languettes axiales 12d tandis que la seconde paroi 14 présente une pluralité de jours 14d configurées pour recevoir les languettes 12d de la première paroi 12. Les languettes 12d et les jours 14d forment dans cet exemple des éléments complémentaires d'emboitement axial des première et seconde parois 12 et 14. Bien entendu, selon une variante non représentée, des languettes peuvent former des éléments complémentaires d'emboitement azimutal, ou d'emboitement axial et azimutal.

Les languettes axiales 12d s'étendent axialement depuis la portion extérieure 12a de la première paroi 12. Les jours 14d sont ménagées dans un épaulement annulaire 14e s'étendant radialement et reliant la portion extérieure 14a et le fond 14c de la seconde paroi 14. Dans cet exemple, il y a autant de languettes 12d que de jours 14d, chaque jour 14d recevant une languette 12d.

Lorsqu'on emboite axialement la première paroi 12 avec la seconde paroi 14, on fait pénétrer les languettes 12d dans les jours 14d tandis que l'extrémité libre axiale de la portion extérieure 12a de la première paroi coopère axialement en butée avec l'épaulement 14e.

La première paroi 12 présente une pluralité de premiers trous traversant 12f, l'axe de ces trous 12f étant orienté radialement. Ces trous 12f sont ménagés dans la portion extérieure 12a de la paroi 12. La seconde paroi 14 présente des seconds trous traversant 14f dont l'axe est orienté radialement. Les trous 14f sont ménagés dans des lames 14g faisant saillie axialement depuis la portion extérieure 14a de la seconde paroi 14. Dans cet exemple, les trous 12f et 14f sont sensiblement circulaires, mais peuvent bien entendu présenter une autre forme. Lorsque les première et seconde parois 12 et 14 sont emboitées, les trous 12f et 14f sont en vis-à-vis. Dans cet exemple, il y autant de premiers trous 12f que de second trous 14f.

Un manchon 16 configuré pour recevoir un injecteur 18 est fixé, par exemple par soudage ou sertissage, dans chaque premier trou 12f. Ce manchon 16 forme une bordure en saillie vers l'extérieur selon l'axe de chaque premier trou 12f. Le rayon maximum des manchons 16 est inférieur au rayon des seconds trous 14f. Ainsi lors de l'emboitement des première et seconde parois 12 et 14, chaque lame 14g coopère par encliquetage avec un manchon 16.

Pour bloquer les lames 14g encliquetées avec les manchons 16, un béquet 20 est rapporté après l'emboitement des première et seconde parois 12 et 14 sur l'extérieur de la portion extérieure 12a de la première paroi 12. Par exemple le béquet 20 est soudé. Un tel béquet 20 permet un blocage intermédiaire de l'emboitement des parois 12 et 14 tant que les injecteurs 18 décrits ci-après formant des broches de verrouillage de l'emboitement ne sont pas installés. Un seul ou plusieurs béquets peuvent être prévus. Dans cet exemple, il y a autant de béquet 20 que de lame 14g. Bien entendu ces béquets 20 sont optionnels et ne sont donc pas présents dans certaines variantes de la chambre de combustion.

Lorsque les première et seconde parois 12 et 14 sont emboitées axialement, les premiers trous 12f sont en vis-à-vis avec les seconds trous 14f. On introduit alors dans chaque paire de premier et second trous 12f et 14f en vis-à-vis un injecteur 18 formant une broche, verrouillant ainsi l'emboitement des première et seconde parois 12 et 14. Les injecteurs 18 s'étendent radialement dans chaque paire de trous 12f et 14f. Les injecteurs 18 sont emmanchés à jeu dans chaque paire de trou de manière à autoriser les déplacements relatifs entre chacun des éléments dus aux différentiels de dilatation thermique, mais couplent néanmoins les première et seconde parois 12 et 14 en translation selon la direction axiale X et en rotation selon la direction azimutale Y. Bien entendu, les manchons 16 participent également au couplage des première et seconde parois 12 et 14, mais ce couplage est relativement fragile notamment à cause des différentiels de dilation thermiques qui dans certaines circonstances peuvent amener les lames 14g à ne plus coopérer efficacement avec les manchons 16, et ce malgré les béquets 20. Ainsi, l'essentiel du verrouillage de l'emboitement des première et seconde parois 12 et 14 est assuré par les broches formées par les injecteurs 18.

Bien que la présente invention ait été décrite en se référant à des exemples de réalisation spécifiques, il est évident que des modifications et des changements peuvent être effectués sur ces exemples tout en restant dans la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Chambre de combustion annulaire (10) de turbomachine (100) présentant une direction axiale (X), une direction radiale (R) et une direction azimutale (Y), comprenant une première paroi annulaire (12) et une seconde paroi annulaire (14), chaque paroi délimitant au moins une partie de l'enceinte (10a) de la chambre de combustion annulaire (10), les première et seconde parois (12, 14) présentant des éléments complémentaires d'emboitement (12d, 14d), la première paroi (12) présentant au moins un premier trou traversant (12f) tandis que la seconde paroi (14) présente au moins un second trou traversant (14f), la chambre de combustion (10) comprenant en outre au moins une broche (18) engagée dans une paire de trous comprenant un premier trou (12f) et un second trou (14f), ladite broche (18) verrouillant l'emboitement des première et seconde parois (12, 14), **caractérisé en ce que**
ladite broche étant formée par un injecteur (18).

2. Chambre de combustion (10) selon la revendication 1, dans laquelle le premier trou (12f) et le second trou (14f) de la paire de trous sont disposées sensiblement en vis-à-vis.

3. Chambre de combustion (10) selon la revendication 1 ou 2, dans laquelle la broche (18) s'étend sensiblement radialement.

4. Chambre de combustion (10) selon l'une quelconque des revendications 1 à 3, dans laquelle les éléments complémentaires d'emboitement comprennent une pluralité de languettes axiales (12d) s'étendant depuis une paroi parmi la première paroi (12) et la seconde paroi (14) et une pluralité de jours (14d) ménagés dans l'autre paroi parmi la première paroi (12) et la seconde paroi (14), lesdits jours (14d) recevant les languettes (12d).

5. Chambre de combustion (10) selon l'une quelconque des revendications 1 à 4, dans laquelle un trou parmi le premier trou (12f) et le second trou (14f) est ménagé dans une lame (14g) faisant saillie.

6. Chambre de combustion (10) selon la revendication 5, dans laquelle une saillie (16) disposée au voisinage de l'autre trou parmi le premier trou (12f) et le second trou (14f) s'étend sensiblement parallèlement à l'axe dudit autre trou de manière à coopérer par encliquetage avec la lame (14g).

7. Chambre de combustion (10) selon l'une quelconque des revendications 1 à 6, dans laquelle une paroi parmi la première paroi (12) et la seconde paroi (14) présente un épaulement annulaire (14e) coopérant axialement en butée avec l'autre paroi parmi la première paroi (12) et la seconde paroi (14).

8. Chambre de combustion (10) selon l'une quelconque des revendications 1 à 7, comprenant uniquement deux parois annulaires délimitant l'enceinte (10a) de la chambre de combustion (10), à savoir la première paroi annulaire (12) et la seconde paroi annulaire (14).

9. Turbomachine (100) comprenant une chambre de combustion (10) selon l'une quelconque des revendications 1 à 8.

## Claims

1. An annular combustion chamber (10) for a turbomachine (100) presenting an axial direction (X), a radial direction (R), and an azimuth direction (Y), comprising a first annular wall (12) and a second annular wall (14), each wall delimiting at least a portion of the volume (10a) of the annular combustion chamber (10), the first and second walls (12, 14) presenting complementary fitting elements (12d, 14d), the first wall (12) presenting at least one first through hole (12f), while the second wall (14) presents at least one second through hole (14f), the combustion chamber (10) further comprising at least one pin (18) engaged in a pair of holes comprising a first hole (12f) and a second hole (14f), said pin (18) locking the fitting of the first and second walls (12, 14), **characterized in that** said pin being formed by an injector (18).

2. A combustion chamber (10) according to claim 1, wherein the first hole (12f) and the second hole (14f) of the pair of holes are disposed substantially facing each other.

3. A combustion chamber (10) according to claim 1 or claim 2, wherein the pin (18) extends substantially radially.

4. A combustion chamber (10) according to any one of claims 1 to 3, wherein the complementary fitting elements comprise a plurality of axial tongues (12d) extending from one wall from among the first wall (12) and the second wall (14), and a plurality of openings (14d) provided in the other wall from among the first wall (12) and the second wall (14), said openings (14d) receiving the tongues (12d).

5. A combustion chamber (10) according to any one of claims 1 to 4, wherein one of the holes from among the first hole (12f) and the second hole (14f) is provided in a projecting blade (14g).

6. A combustion chamber (10) according to claim 5, wherein a projection (16) arranged in the vicinity of the other hole from among the first hole (12f) and the second hole (14f) extends substantially parallel of the axis of said other hole so as to co-operate with the blade (14g) by snap-fitting.

7. A combustion chamber (10) according to any one of claims 1 to 6, wherein one of the walls from among the first wall (12) and the second wall (14) presents an annular shoulder (14e) that co-operates axially in abutment with the other wall from among the first wall (12) and the second wall (14).

8. A combustion chamber (10) according to any one of claims 1 to 7, having only two annular walls delimiting the volume (10a) of the combustion chamber (10), namely the first annular wall (12) and the second annular wall (14).

9. A turbomachine (100) including a combustion chamber (10) according to any one of claims 1 to 8.

## Patentansprüche

1. Ringförmige Brennkammer (10) einer Turbomaschine (100) mit einer axialen Richtung (X), einer radialen Richtung (R) und einer Azimutrichtung (Y), umfassend eine erste ringförmige Wand (12) und eine zweite ringförmige Wand (14), wobei jede Wand mindestens einen Teil des Gehäuses (10a) der ringförmigen Brennkammer (10) begrenzt, wobei die erste und die zweite Wand (12, 14) komplementäre Eingriffselemente (12d, 14d) aufweisen, wobei die erste Wand (12) mindestens ein erstes Durchgangsloch (12f) aufweist, während die zweite Wand (14) mindestens ein zweites Durchgangsloch (14f) aufweist, wobei die Brennkammer (10) ferner mindestens einen Stift (18) aufweist, der in ein Paar von Löchern eingreift, die ein erstes Loch (12f) und ein zweites Loch (14f) umfassen, wobei der Stift (18) den Eingriff der ersten und zweiten Wände (12, 14) blockiert,
**dadurch gekennzeichnet, dass**
der Stift durch einen Injektor (18) gebildet wird.

2. Brennkammer (10) gemäß Anspruch 1, wobei das erste Loch (12f) und das zweite Loch (14f) des Lochpaares im Wesentlichen gegenüberliegend angeordnet sind.

3. Brennkammer (10) gemäß Anspruch 1 oder 2, wobei der Stift (18) sich im Wesentlichen radial erstreckt.

4. Brennkammer (10) gemäß einem der Ansprüche 1 bis 3, wobei die komplementären Eingriffselemente eine Vielzahl von axialen Laschen (12d), die sich von der einer Wand der beiden Wände erste Wand (12) und zweite Wand (14) aus erstrecken, und eine Vielzahl von Öffnungen (14d) umfassen, die in der anderen Wand der ersten Wand (12) und der zweiten Wand (14) eingerichtet sind, wobei die Öffnungen (14d) die Laschen (12d) aufnehmen.

5. Brennkammer (10) gemäß einem der Ansprüche 1 bis 4, wobei eines der beiden Löcher erstes Loch (12f) und zweites Loch (14f) in einem hervorstehenden Plättchen (14g) vorgesehen ist.

6. Brennkammer (10) gemäß Anspruch 5, wobei sich ein Vorsprung (16), der in der Nähe des anderen der beiden Löcher erstes Loch (12f) und zweites Loch (14f) angeordnet ist, im Wesentlichen parallel zur Achse des anderen Lochs so erstreckt, dass er mit dem Plättchen (14g) durch Einrasten zusammenwirkt.

7. Brennkammer (10) gemäß einem der Ansprüche 1 bis 6, wobei eine unter der ersten Wand (12) und der zweiten Wand (14) einen ringförmigen Absatz (14e) aufweist, der axial anliegend mit der anderen der beiden Wände erste Wand (12) und die zweite Wand (14) zusammenwirkt.

8. Brennkammer (10) gemäß einem der Ansprüche 1 bis 7, umfassend nur zwei ringförmige Wände, die das Gehäuse (10a) der Brennkammer (10) begrenzen, nämlich die erste ringförmige Wand (12) und die zweite ringförmige Wand (14).

9. Turbomaschine (100) mit einer Brennkammer (10) gemäß einem der Ansprüche 1 bis 8.
